# EUROPEAN PATENT APPLICATION

(11) **EP 4 195 541 A1**
(43) Date of publication of application: **14.06.2023**
(21) Application number: 21860338.9
(22) Date of filing: 23.08.2021

(54) **MESSAGE TRANSMISSION METHOD, APPARATUS, AND SYSTEM**

(30) Priority: 28.08.2020 CN 202010890127
(71) Applicant: Huawei Technologies Co., Ltd., Shenzhen, Guangdong 518129 (CN)
(72) Inventor: WANG, Hu, Shenzhen, Guangdong 518129 (CN); ZHAO, Ranxiao, Shenzhen, Guangdong 518129 (CN); HUA, Ting, Shenzhen, Guangdong 518129 (CN); LI, Zuqing, Shenzhen, Guangdong 518129 (CN)
(74) Representative: Maiwald GmbH
(86) International application number: PCT/CN2021/114150
(87) International publication number: WO 2022/042503

(57) **Abstract**

Embodiments of this application provide a packet transmission method, apparatus, and system, and relate to the computer field, to increase a probability that a transmitting end device of a probe packet receives a response packet of the probe packet, and improve tunnel detection accuracy when the probe packet is used to detect a tunnel status. A specific solution is as follows: A first network device sends a probe packet to a second network device, where the probe packet includes an identifier of the first network device, and the identifier of the first network device is used to indicate the second network device to add the identifier of the first network device to a destination address in a response packet of the probe packet; and receives the response packet from the second network device, where the destination address in the response packet is the identifier of the first network device; or receives an updated response packet from a third network device, where a destination address in the updated response packet is the identifier of the first network device, and both the third network device and the first network device are connected to a same user-side network device.

## Description

This application claims priority to Chinese Patent Application No. 202010890127.0, filed with the China National Intellectual Property Administration on August 28, 2020 and entitled "PACKET TRANSMISSION METHOD, APPARATUS, AND SYSTEM", which is incorporated herein by reference in its entirety.

### TECHNICAL FIELD

Embodiments of this application relate to the computer field, and in particular, to a packet transmission method, apparatus, and system.

### BACKGROUND

In an Ethernet virtual private network (ethernet virtual private network, EVPN) virtual private wire service (virtual private wire service, VPWS) system, if an EVPN VPWS tunnel is abnormal, for example, a label switched path (Label Switched Path, LSP) fails to forward data, and an EVPN VPWS control plane cannot detect such an error, there is difficulty in network maintenance.

An EVPN VPWS packet internet groper (packet internet groper, Ping) provides an EVPN VPWS tunnel detection solution in an EVPN VPWS scenario, to detect whether an EVPN tunnel from a transmitting end device to a receiving end device is normal. This process includes: The transmitting end device generates a probe (echo request) packet, where the probe packet carries identifier (identifiers, ID) information of the to-be-detected tunnel, and sends the probe packet to the receiving end device through the EVPN VPWS tunnel. The receiving end device receives the probe packet, performs detection check based on the identifier information of the to-be-detected tunnel in the probe packet, to determine whether the to-be-detected tunnel is normal or abnormal, encapsulates a current detection check result into a response (echo reply) packet, and then sends the response packet to the transmitting end device through the EVPN VPWS tunnel. The transmitting end device receives the response packet, and obtains the current detection check result in the response packet. The transmitting end device sends a plurality of probe packets, receives a plurality of response packets, and determines, based on detection check results in the plurality of response packets, whether the EVPN VPWS tunnel from the transmitting end device to the receiving end device is normal.

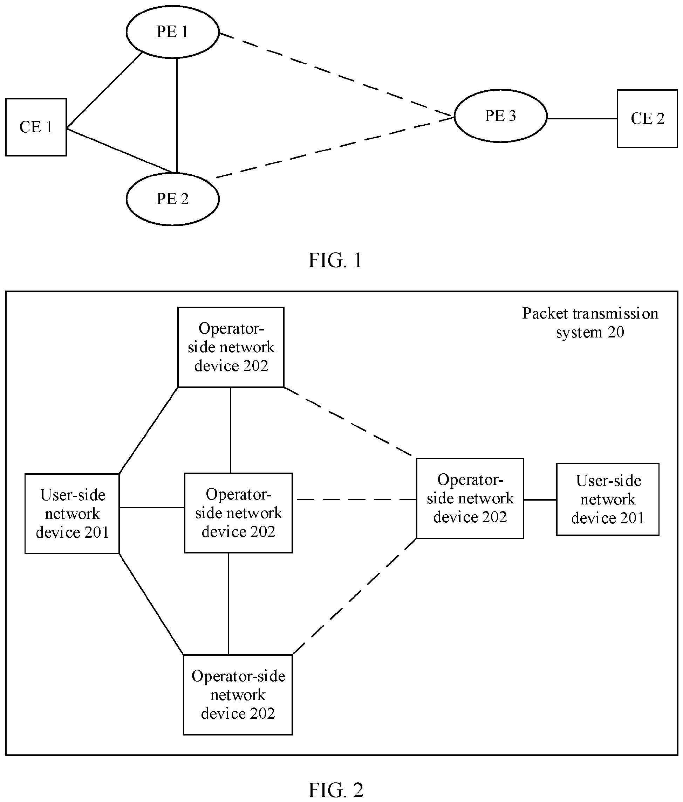

In a packet transmission system in an EVPN VPWS dual-homing active-active scenario, as shown in FIG. 1, a customer edge device (customer edge device, CE) 1 is dual-homed to a provider edge device (provider edge device, PE) 1 and a PE 2, and a CE 2 is single-homed to a PE 3. The PE 1 and the PE 2 are set to an active-active mode. The PE 1 may communicate with the PE 3 through an EVPN VPWS tunnel, and the PE 2 may communicate with the PE 3 through an EVPN VPWS tunnel. An EVPN VPWS tunnel identifier (local EVPN VPWS ID) on a side of each of the PE 1 and the PE 2 is 100, and an EVPN VPWS tunnel identifier (remote EVPN VPWS ID) on a side of the PE 3 is 200. In this scenario, if the PE 1 initiates tunnel detection to detect whether the EVPN VPWS tunnel from the tunnel identifier 100 to the tunnel identifier 200 is normal, the PE 1 sends a probe packet to the PE 3 through the EVPN VPWS tunnel, and the PE 3 receives the probe packet, obtains a detection result based on the probe packet, and then sends a response packet that includes the detection result to a tunnel egress device through the EVPN VPWS tunnel. Tunnel identifiers on the PE 1 and the PE 2 in this scenario are the same. Therefore, the PE 1 may normally receive the response packet, or may not receive the response packet, in other words, the response packet is received by the PE 2.

In the foregoing tunnel detection solution, it cannot be ensured that a transmitting end device, namely, the PE 1, of the probe packet can receive the response packet of the sent probe packet. If the PE 1 cannot normally receive the response packet, it is determined that the EVPN VPWS tunnel from 100 to 200 is abnormal. In this case, the tunnel from 100 to 200 may be normal, but there is a detection error for the PE 1 just because the response packet is received by the PE 2 and cannot reach the PE 1. Consequently, there is relatively low tunnel detection accuracy.

### SUMMARY

This application provides a packet transmission method, apparatus, and system, to increase a probability that a transmitting end device of a probe packet receives a response packet of the sent probe packet, and improve tunnel detection accuracy when the probe packet is used to detect a tunnel status.

The following technical solutions are used in this application:
According to a first aspect, this application provides a packet transmission method. The method is performed by a first network device. The method may include: sending a probe packet to a second network device, where the probe packet may include an identifier of the first network device, and the identifier of the first network device is used to indicate the second network device to add the identifier of the first network device to a destination address in a response packet of the probe packet; and receiving the response packet from the second network device, where the destination address in the response packet is the identifier of the first network device; or receiving an updated response packet from a third network device, where a destination address in the updated response packet is the identifier of the first network device, and both the third network device and the first network device are connected to a same user-side network device.

According to the packet transmission method provided in this embodiment of this application, an identifier of a transmitting end device is added to a probe packet, and a receiving end device of the probe packet adds the identifier as a destination address in a response packet of the probe packet. In this way, even if a non-transmitting end device receives the response packet, the response packet may be forwarded to the transmitting end device of the probe packet based on the destination address in the response packet, to ensure that the transmitting end device of the probe packet can receive the response packet of the sent probe packet. When the probe packet is used to detect a tunnel status, a detection error caused due to the fact that the transmitting end device of the probe packet cannot receive the response packet of the probe packet is avoided, and tunnel detection accuracy is improved. In addition, an addition location of the identifier is a destination address field in the response packet, and therefore when receiving the response packet, the non-transmitting end device can directly forward the response packet to the transmitting end device of the probe packet based on a conventional routing and forwarding mechanism, and there is no need to excessively modify packet forwarding behavior of the non-transmitting end device, which helps improve running compatibility and friendliness of a network.

With reference to the first aspect, in a possible implementation, the identifier of the first network device may include an internet protocol (internet protocol, IP) address of the first network device or a media access control (media access control, MAC) address of the first network device. In this possible implementation, the IP address or the MAC address may be used as the identifier of the first network device, and there is relatively high implementation flexibility.

With reference to the first aspect or the possible implementation, in another possible implementation, the IP address of the first network device may include an interface IP address of the first network device, a loopback loopback interface IP address of the first network device, or a segment identifier (segment identifiers, SID) in a form of an IP address of the first network device. In this possible implementation, different forms of IP addresses may be configured based on an actual requirement, to adapt to different application scenarios.

With reference to any one of the first aspect or the possible implementations, in another possible implementation, before the sending a probe packet to a second network device, the method may further include: generating the probe packet, where the identifier of the first network device may be encapsulated into a data part in the probe packet in a tag-length-value TLV format, or the identifier of the first network device may be encapsulated into a source IP address in an IP header in the probe packet. In this possible implementation, the identifier of the first network device may be stored at different locations in the probe packet based on an actual requirement, and there is a wide application range.

With reference to any one of the first aspect or the possible implementations, in another possible implementation, the probe packet may further include an addition indication, and that the identifier of the first network device may be used to indicate the second network device to add the identifier of the first network device to a destination address in a response packet of the probe packet may include: The identifier of the first network device and the addition indication may be used to jointly indicate the second network device to add the identifier of the first network device to the destination address in the response packet. In this possible implementation, the addition indication may be used to enable the second network device to add the identifier of the first network device to the destination address in the response packet, and implementation is simple.

With reference to any one of the first aspect or the possible implementations, in another possible implementation, the method may further include: receiving another response packet; and forwarding, based on the fact that a destination address in the another response packet is an address other than the identifier of the first network device, the another response packet to a network device indicated by the destination address in the another response packet, where the network device indicated by the destination address in the another response packet is connected to the user-side network device. The network device indicated by the destination address in the another response packet may be, for example, the third network device in a multi-homing multi-active scenario, or one or more other network devices that have a multi-homing relationship with the first network device.

With reference to any one of the first aspect or the possible implementations, in another possible implementation, the first network device, the second network device, and the third network device may be provider edge devices PEs, and the user-side network device may be a customer edge device CE.

With reference to any one of the first aspect or the possible implementations, in another possible implementation, the probe packet may be a probe packet in an Ethernet virtual private network EVPN virtual private wire service VPWS scenario, and the response packet may be a response packet in the EVPN VPWS scenario.

According to a second aspect, this application provides another packet transmission method. The method may be performed by a second network device. The method may include: receiving a probe packet sent by a first network device, where the probe packet includes an identifier of the first network device; generating a response packet of the probe packet, where a destination address in the response packet includes the identifier of the first network device; and sending the response packet to the first network device or a third network device, where both the third network device and the first network device are connected to a same user-side network device.

According to the packet transmission method provided in this embodiment of this application, an identifier of a transmitting end device is added to a probe packet, and a receiving end device of the probe packet adds the identifier as a destination address in a response packet of the probe packet. In this way, even if a non-transmitting end device receives the response packet, the response packet may be forwarded to the transmitting end device of the probe packet based on the destination address in the response packet, to ensure that the transmitting end device of the probe packet can receive the response packet of the sent probe packet. When the probe packet is used to detect a tunnel status, a detection error caused due to the fact that the transmitting end device of the probe packet cannot receive the response packet of the probe packet is avoided, and tunnel detection accuracy is improved. In addition, the identifier is added to a destination address field in the response packet, and therefore it can be ensured that when receiving the response packet, the non-transmitting end device can directly forward the response packet to the transmitting end device of the probe packet based on a conventional routing and forwarding mechanism, which helps improve running compatibility and friendliness of a network.

With reference to the second aspect, in a possible implementation, the identifier of the first network device may include an internet protocol IP address of the first network device or a media access control MAC address of the first network device. In this possible implementation, the IP address or the MAC address may be used as the identifier of the first network device, and there is relatively high implementation flexibility.

With reference to the second aspect or the possible implementation, in another possible implementation, the IP address of the first network device may include an interface IP address of the first network device, a loopback loopback interface IP address of the first network device, or a segment identifier SID in a form of an IP address of the first network device. In this possible implementation, different forms of IP addresses may be configured based on an actual requirement, to adapt to different application scenarios.

With reference to any one of the second aspect or the possible implementations, in another possible implementation, the identifier of the first network device may be encapsulated into a data part in the probe packet in a tag-length-value TLV format, or the identifier of the first network device may be encapsulated into a source IP address in an IP header in the probe packet. In this possible implementation, the identifier of the first network device may be stored at different locations in the probe packet based on an actual requirement, and there is a wide application range.

With reference to any one of the second aspect or the possible implementations, in another possible implementation, the probe packet may further include an addition indication, and the method may further include: adding the identifier of the first network device to the destination address in the response packet based on the addition indication and the identifier of the first network device. In this possible implementation, the addition indication may be used to enable the second network device to add the identifier of the first network device to the destination address in the response packet, and implementation is simple.

With reference to any one of the second aspect or the possible implementations, in another possible implementation, the generating a response packet of the probe packet may include: adding the IP address of the first network device to a destination IP address in the response packet; or adding the MAC address of the first network device to a destination MAC address in the response packet.

With reference to any one of the second aspect or the possible implementations, in another possible implementation, the sending the response packet to the first network device or a third network device may include: sending the response packet to the first network device or the third network device based on a load sharing algorithm.

With reference to any one of the second aspect or the possible implementations, in another possible implementation, the first network device, the second network device, and the third network device may be provider edge devices PEs, and the user-side network device may be a customer edge device CE.

With reference to any one of the second aspect or the possible implementations, in another possible implementation, the probe packet may be a probe packet in an Ethernet virtual private network EVPN virtual private wire service VPWS scenario, and the response packet may be a response packet in the EVPN VPWS scenario.

According to a third aspect, this application further provides a packet transmission apparatus. The apparatus may be the first network device in any one of the first aspect or the possible implementations of the first aspect, or the apparatus may be deployed in the first network device. The apparatus may include a first sending unit and a first receiving unit.

The first sending unit is configured to send a probe packet to a second network device. The probe packet includes an identifier of the first network device, and the identifier of the first network device is used to indicate the second network device to add the identifier of the first network device to a destination address in a response packet of the probe packet.

The first receiving unit is configured to: receive the response packet from the second network device, where the destination address in the response packet is the identifier of the first network device; or receive an updated response packet from a third network device, where a destination address in the updated response packet is the identifier of the first network device, and both the third network device and the first network device are connected to a same user-side network device.

With reference to the third aspect, in a possible implementation, the identifier of the first network device includes:
an internet protocol IP address of the first network device or a media access control MAC address of the first network device.

With reference to any one of the third aspect or the possible implementation, in another possible implementation, the IP address of the first network device includes an interface IP address of the first network device, a loopback loopback interface IP address of the first network device, or a segment identifier SID in a form of an IP address of the first network device.

With reference to any one of the third aspect or the possible implementations, in another possible implementation, before the first sending unit sends the probe packet to the second network device, the apparatus further includes:
a processing unit, configured to generate the probe packet. The identifier of the first network device is encapsulated into a data part in the probe packet in a tag-length-value TLV format, or the identifier of the first network device is encapsulated into a source IP address in an IP header in the probe packet.

With reference to any one of the third aspect or the possible implementations, in another possible implementation, the probe packet further includes an addition indication, and that the identifier of the first network device is used to indicate the second network device to add the identifier of the first network device to a destination address in a response packet of the probe packet includes: The identifier of the first network device and the addition indication are used to jointly indicate the second network device to add the identifier of the first network device to the destination address in the response packet.

With reference to any one of the third aspect or the possible implementations, in another possible implementation, the apparatus further includes: a second receiving unit, configured to receive another response packet; and a second sending unit, configured to forward, based on the fact that a destination address in the another response packet is an address other than the identifier of the first network device, the another response packet to a network device indicated by the destination address in the another response packet, where the network device indicated by the destination address in the another response packet is connected to the user-side network device.

With reference to any one of the third aspect or the possible implementations, in another possible implementation, the first network device, the second network device, and the third network device are provider edge devices PEs, and the user-side network device is a customer edge device CE.

With reference to any one of the third aspect or the possible implementations, in another possible implementation, the probe packet is a probe packet in an Ethernet virtual private network EVPN virtual private wire service VPWS scenario, and the response packet is a response packet in the EVPN VPWS scenario.

It should be noted that the packet transmission apparatus provided in the third aspect is configured to perform the packet transmission method provided in the first aspect. For specific implementation, refer to the specific implementation in the first aspect.

According to a fourth aspect, this application provides a packet transmission apparatus. The apparatus may be the second network device in any one of the second aspect or the possible implementations of the second aspect, or the apparatus may be deployed in the second network device. The apparatus may include a receiving unit, a processing unit, and a sending unit.

The receiving unit is configured to receive a probe packet sent by a first network device. The probe packet includes an identifier of the first network device.

The processing unit is configured to generate a response packet of the probe packet. A destination address in the response packet includes the identifier of the first network device.

The sending unit is configured to send the response packet to the first network device or a third network device. Both the third network device and the first network device are connected to a same user-side network device.

With reference to the fourth aspect, in a possible implementation, the identifier of the first network device includes an internet protocol IP address of the first network device or a media access control MAC address of the first network device.

With reference to any one of the fourth aspect or the possible implementation, in another possible implementation, the IP address of the first network device includes an interface IP address of the first network device, a loopback loopback interface IP address of the first network device, or a segment identifier SID in a form of an IP address of the first network device.

With reference to any one of the fourth aspect or the possible implementations, in another possible implementation, the identifier of the first network device is encapsulated into a data part in the probe packet in a tag-length-value TLV format, or the identifier of the first network device is encapsulated into a source IP address in an IP header in the probe packet.

With reference to any one of the fourth aspect or the possible implementations, in another possible implementation, the probe packet further includes an addition indication, and the apparatus further includes: an addition unit, configured to add the identifier of the first network device to the destination address in the response packet based on the addition indication and the identifier of the first network device.

With reference to any one of the fourth aspect or the possible implementations, in another possible implementation, the processing unit is specifically configured to: add the IP address of the first network device to a destination IP address in the response packet; or add the MAC address of the first network device to a destination MAC address in the response packet.

With reference to any one of the fourth aspect or the possible implementations, in another possible implementation, the sending unit is specifically configured to send the response packet to the first network device or the third network device based on a load sharing algorithm.

With reference to any one of the fourth aspect or the possible implementations, in another possible implementation, the first network device, the second network device, and the third network device are provider edge devices PEs, and the user-side network device is a customer edge device CE.

With reference to any one of the fourth aspect or the possible implementations, in another possible implementation, the probe packet is a probe packet in an Ethernet virtual private network EVPN virtual private wire service VPWS scenario, and the response packet is a response packet in the EVPN VPWS scenario.

It should be noted that the packet transmission apparatus provided in the fourth aspect is configured to perform the packet transmission method provided in the second aspect. For specific implementation, refer to the specific implementation in the second aspect.

According to a fifth aspect, an embodiment of this application provides a first network device. The device may include a processor, configured to implement the packet transmission method described in the first aspect. The device may further include a memory. The memory is coupled to the processor. When the processor executes instructions stored in the memory, the packet transmission method described in any one of the first aspect or the possible implementations of the first aspect may be implemented. The device may further include a communication interface. The communication interface is used by the apparatus to communicate with another device. For example, the communication interface may be a transceiver, a circuit, a bus, a module, or another type of communication interface. In a possible implementation, the device may include:
a memory, configured to store instructions; and
a processor, configured to: send a probe packet to a second network device, where the probe packet may include an identifier of the first network device, and the identifier of the first network device is used to indicate the second network device to add the identifier of the first network device to a destination address in a response packet of the probe packet; and receive the response packet from the second network device, where the destination address in the response packet is the identifier of the first network device; or receive an updated response packet from a third network device, where a destination address in the updated response packet is the identifier of the first network device, and both the third network device and the first network device are connected to a same user-side network device.

It should be noted that the instructions in the memory in this application may be pre-stored, or may be stored after being downloaded from the Internet when the apparatus is used. A source of the instructions in the memory is not specifically limited in this application. The coupling in this embodiment of this application is indirect coupling or a communication connection between apparatuses, units, or modules for information exchange between the apparatuses, the units, or the modules, and may be in electrical, mechanical, or other forms.

According to a sixth aspect, an embodiment of this application provides a second network device. The device may include a processor, configured to implement the packet transmission method described in any one of the second aspect or the possible implementations of the second aspect. The device may further include a memory. The memory is coupled to the processor. When the processor executes instructions stored in the memory, the packet transmission method described in the second aspect may be implemented. The device may further include a communication interface. The communication interface is used by the apparatus to communicate with another device. For example, the communication interface may be a transceiver, a circuit, a bus, a module, or another type of communication interface. In a possible implementation, the device includes:
a memory, configured to store instructions; and
a processor, configured to: receive a probe packet sent by a first network device, where the probe packet includes an identifier of the first network device; generate a response packet of the probe packet, where a destination address in the response packet includes the identifier of the first network device; and send the response packet to the first network device or a third network device, where both the third network device and the first network device are connected to a same user-side network device.

It should be noted that the instructions in the memory in this application may be pre-stored, or may be stored after being downloaded from the Internet when the apparatus is used. A source of the instructions in the memory is not specifically limited in this application. The coupling in this embodiment of this application is indirect coupling or a communication connection between apparatuses, units, or modules for information exchange between the apparatuses, the units, or the modules, and may be in electrical, mechanical, or other forms.

According to a seventh aspect, a packet transmission system is provided. The communication system may include a first apparatus for packet transmission and a second apparatus for packet transmission. The first apparatus for packet transmission may be the apparatus in any one of the third aspect or the possible implementations of the third aspect, and the second apparatus for packet transmission may be the apparatus in any one of the fourth aspect or the possible implementations of the fourth aspect.

According to an eighth aspect, a packet transmission system is provided. The communication system may include a first network device and a second network device. The first network device may be the apparatus in any one of the fifth aspect or the possible implementations of the fifth aspect, and the second network device may be the apparatus in any one of the sixth aspect or the possible implementations of the sixth aspect.

According to a ninth aspect, an embodiment of this application further provides a computer-readable storage medium, including instructions. When the instructions are run on a computer, the computer is enabled to perform the packet transmission method in any one of the foregoing aspects or any one of the foregoing possible implementations.

According to a tenth aspect, an embodiment of this application further provides a computer program product. When the computer program product is run on a computer, the computer is enabled to perform the packet transmission method in any one of the foregoing aspects or any one of the foregoing possible implementations.

According to an eleventh aspect, an embodiment of this application provides a chip system. The chip system includes a processor, and may further include a memory, configured to implement the function performed by the first network device in the foregoing method. The chip system may include a chip, or include a chip and another discrete device.

According to a twelfth aspect, an embodiment of this application provides a chip system. The chip system includes a processor, and may further include a memory, configured to implement the function performed by the second network device in the foregoing method. The chip system may include a chip, or include a chip and another discrete device.

The solutions provided in the third aspect to the twelfth aspect are used to implement the packet transmission methods provided in the first aspect and the second aspect, and therefore can achieve beneficial effects the same as those in the first aspect and the second aspect. Details are not described herein.

It should be noted that the possible implementations of any one of the foregoing aspects may be combined when the solutions are not contradictory.

### BRIEF DESCRIPTION OF DRAWINGS

FIG. 1 is a schematic diagram of a structure of a packet transmission system in an EVPN VPWS dual-homing active-active scenario according to an embodiment of this application;
FIG. 2 is a schematic diagram of a structure of a packet transmission system according to an embodiment of this application;
FIG. 3 is a schematic diagram of a structure of a packet transmission system in another EVPN VPWS dual-homing active-active scenario according to an embodiment of this application;
FIG. 4 is a schematic diagram of a structure of a network device according to an embodiment of this application;
FIG. 5 is a schematic flowchart of a packet transmission method according to an embodiment of this application;
FIG. 6 is a schematic diagram of a structure of a probe packet according to an embodiment of this application;
FIG. 7 is a schematic diagram of a structure of a response packet according to an embodiment of this application;
FIG. 8 is a schematic diagram of a structure of another response packet according to an embodiment of this application;
FIG. 9 is a schematic flowchart of another packet transmission method according to an embodiment of this application;
FIG. 10 is a schematic diagram of a structure of a packet transmission apparatus according to an embodiment of this application;
FIG. 11 is a schematic diagram of a structure of another packet transmission apparatus according to an embodiment of this application;
FIG. 12 is a schematic diagram of a structure of a first network device according to an embodiment of this application;
FIG. 13 is a schematic diagram of a structure of another packet transmission apparatus according to an embodiment of this application;
FIG. 14 is a schematic diagram of a structure of still another packet transmission apparatus according to an embodiment of this application; and
FIG. 15 is a schematic diagram of a structure of a second network device according to an embodiment of this application.

### DESCRIPTION OF EMBODIMENTS

In the specification, claims, and accompanying drawings of this application, the terms "first", "second", "third", and the like are intended to distinguish between different objects but do not indicate a particular order.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner for ease of understanding.

In the description of this application, unless otherwise specified, "/" means an "or" relationship between associated objects. For example, A/B may mean A or B. "And/Or" in this specification is merely an association relationship for describing associated objects, and represents that three relationships may exist. For example, A and/or B may represent the following three cases: Only A exists, both A and B exist, and only B exists, where A and B may be in a singular form or a plural form. In addition, in the descriptions of this application, unless otherwise specified, "a plurality of" means two or more than two. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural.

In the embodiments of this application, "at least one" may alternatively be described as "one or more", and "a plurality of" may mean two, three, four, or more. This is not limited in this application.

As described above, in an existing tunnel detection solution, it cannot be ensured that a transmitting end device of a probe packet can receive a response packet of the sent probe packet, and consequently there is relatively low tunnel detection accuracy. Based on this, the embodiments of this application provide a packet transmission method. An identifier of a transmitting end device is added to a probe packet, and a receiving end device of the probe packet adds the identifier as a destination address in a response packet of the probe packet. In this way, even if a non-transmitting end device receives the response packet, the response packet may be forwarded to the transmitting end device of the probe packet based on the destination address in the response packet, to ensure that the transmitting end device of the probe packet can receive the response packet of the sent probe packet. When the probe packet is used to detect a tunnel status, a detection error caused due to the fact that the transmitting end device of the probe packet cannot receive the response packet of the probe packet is avoided, and tunnel detection accuracy is improved. In addition, the identifier of the transmitting end device is added to a destination address part in the response packet, and therefore when receiving the response packet, the non-transmitting end device can directly forward the response packet to the transmitting end device based on a conventional routing and forwarding mechanism, to ensure running compatibility and friendliness of a network.

The following describes the implementations of embodiments of this application in detail with reference to the accompanying drawings.

The solutions provided in the embodiments of this application may be applied to a packet transmission system 20 shown in FIG. 2. As shown in FIG. 2, the packet transmission system 20 may include a plurality of user-side network devices 201 and a plurality of operator-side network devices 202. One user-side network device 201 may be connected to one or more operator-side network devices 202. The user-side network device 201 may communicate with the operator-side network device 202 through an IP route. The operator-side network device 202 may communicate with the operator-side network device 202 through a tunnel or an IP route or in another manner.

The user-side network device 201 may be a CE or another device. For example, the user-side network device 201 may be a router or a switch. The user-side network device 201 may communicate, by using one or more operator-side network devices 202, with another user-side network device 201 that performs access by using another operator-side network device 202. A manner in which the user-side network device 201 is directly connected to the operator-side network device 202 shown in FIG. 2 is merely used as a possible example. The user-side network device 201 may alternatively be connected to the operator-side network device 202 by using one or more other network devices.

The operator-side network device 202 may be a PE or another device. For example, the operator-side network device 202 may be a router, a switch, or another product form.

In a possible implementation, the operator-side network device 202 may send a probe packet and/or receive a response packet based on the solutions provided in this application; or the operator-side network device 202 may receive a probe packet and send a response packet of the received probe packet based on the solutions provided in this application. For a specific processing process, refer to description in the following method embodiments.

The tunnel may be of a tunnel type such as multi-protocol label switching (multi-protocol label switching, MPLS), segment routing (segment routing, SR), or SRv6.

It should be noted that the packet transmission system 20 may be used for packet transmission in different scenarios. This is not uniquely limited in this embodiment of this application.

For example, the packet transmission system 20 may be applied to packet transmission in an EVPN VPWS multi-homing multi-active scenario. In an EVPN VPWS multi-homing scenario, one user-side network device 201 is connected to a plurality of operator-side network devices 202, and the operator-side network device 202 is set to a multi-active mode.

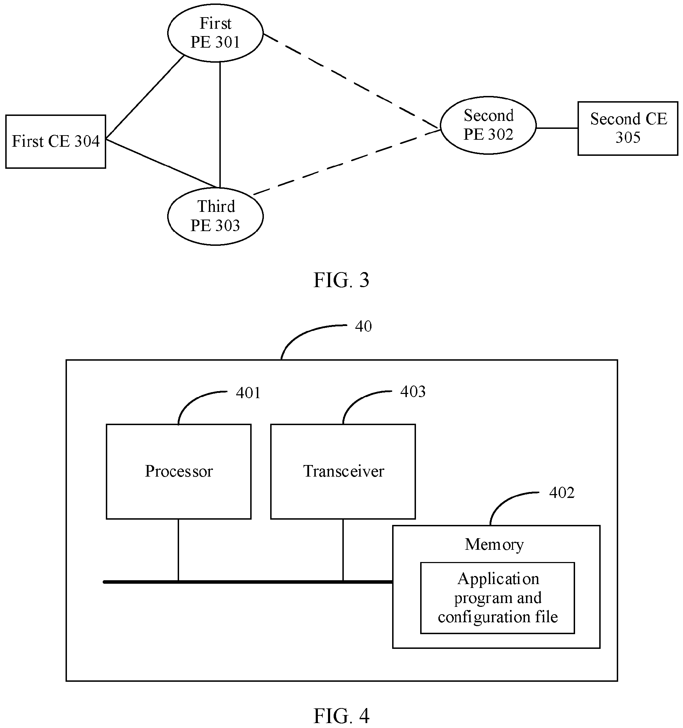

For example, FIG. 3 shows a structure of the packet transmission system 20 applied to an EVPN VPWS dual-homing active-active scenario. As shown in FIG. 3, the packet transmission system 20 may include a first PE 301, a second PE 302, a third PE 303, a first CE 304, and a second CE 305.

The first CE 304 is dual-homed to the first PE 301 and the third PE 303. The second CE 305 is single-homed to the second PE 302. The first PE 301 communicates with the second PE 302 through an EVPN VPWS tunnel. The second PE 302 communicates with the third PE 303 through an EVPN VPWS tunnel. The first PE 301 communicates with the third PE 303 through an IP route or a tunnel or in another manner.

Similarly, other PEs may directly communicate with each other, or other PEs may communicate with each other by using another node.

It may be understood that the second CE 305 is single-homed to the second PE 302. In actual application, the second CE 305 may alternatively be dual-homed to two PEs. There may further be more CEs that access the third PE 303. A quantity of CEs and a quantity of PEs included in this scenario, a connection manner between the CE and the PE, and a connection manner between PEs are not specifically limited in this embodiment of this application.

For example, the first PE 301 may be configured to: send a probe packet, and receive a response packet of the probe packet that is sent by the second PE 302 or the third PE 303; the second PE 302 may be configured to: receive the probe packet sent by the first PE 301, and send the response packet of the probe packet to the first PE 301 or the third PE 303; and the third PE 303 may be configured to: receive the response packet of the probe packet that is sent by the second PE 302, and forward the response packet of the probe packet to the first PE 301.

The solutions provided in the embodiments of this application are described below in detail with reference to the accompanying drawings.

An embodiment of this application provides a network device 40, configured to perform the packet transmission method provided in this application. The network device 40 may be the operator-side network device 202 shown in FIG. 2.

FIG. 4 is a diagram of a structure of the network device 40 according to an embodiment of this application. As shown in FIG. 4, the network device 40 may include a processor 401, a memory 402, and a transceiver 403.

The components of the network device 40 are described below in detail with reference to FIG. 4.

The memory 402 may be a volatile memory (volatile memory), for example, a random access memory (random access memory, RAM); may be a non-volatile memory (non-volatile memory), for example, a read-only memory (read-only memory, ROM), a flash memory (flash memory), a hard disk drive (hard disk drive, HDD), or a solid-state drive (solid-state drive, SSD); or may be a combination of the foregoing types of memories, configured to store application program code, a configuration file, data information, or other content that can be used to implement the method in this application.

The transceiver 403 is used by the network device 40 to exchange information with another device. For example, the transceiver 403 may be configured to exchange information with another network device.

The processor 401 may be a control center of the network device 40. For example, the processor 401 may be a central processing unit (central processing unit, CPU), or an application specific integrated circuit (application specific integrated circuit, ASIC), or may be configured as one or more integrated circuits implementing this embodiment of this application, for example, one or more microprocessors (digital signal processors, DSPs) or one or more field programmable gate arrays (field programmable gate array, FPGAs).

In a possible implementation, the network device 40 is a transmitting end device of a probe packet, and the processor 401 runs or executes a software program and/or a module stored in the memory 402, so that the network device 40 serves as a first network device to perform the following functions:
sending a probe packet to a second network device, where the probe packet includes an identifier of the first network device, and the identifier of the first network device is used to indicate the second network device to add the identifier of the first network device to a destination address in a response packet of the probe packet; and receiving the response packet from the second network device, where the destination address in the response packet is the identifier of the first network device; or receiving an updated response packet from a third network device, where a destination address in the updated response packet is the identifier of the first network device, and both the third network device and the first network device are connected to a same user-side network device.

In this implementation, the network device 40 may be, for example, the first PE 301 shown in FIG. 3.

In another possible implementation, the network device 40 is a receiving end device of a probe packet, and the processor 401 runs or executes a software program and/or a module stored in the memory 402, so that the network device 40 serves as a second network device to perform the following functions:
receiving a probe packet sent by a first network device, where the probe packet includes an identifier of the first network device; generating a response packet of the probe packet, where a destination address in the response packet includes the identifier of the first network device; and sending the response packet to the first network device or a third network device, where both the third network device and the first network device are connected to a same user-side network device.

In this implementation, the network device 40 may be, for example, the second PE 302 shown in FIG. 3.

In the two possible implementations, the processor 401 may perform all the described functions by running or executing the software program and/or the module stored in the memory 402; or may jointly perform all the described functions in cooperation with another component or module in the network device 40 by running or executing the software program and/or the module stored in the memory 402. For example, the processor 401 performs the function of generating a probe packet or a response packet, and sends or receives a corresponding probe packet or a response packet by using the transceiver 403.

In addition, an embodiment of this application provides a packet transmission method. The method may be applied to an interaction process between a first network device and a second network device. The first network device and the second network device may be operator-side network devices in the packet transmission system shown in FIG. 2. Both the first network device and a third network device are connected to a first user-side network device, and the second network device is connected to a second user-side network device. For example, the first network device may be the first PE 301 shown in FIG. 3, the second network device may be the second PE 302 shown in FIG. 3, and the third network device may be the third PE 303 shown in FIG. 3.

It should be noted that the packet transmission method provided in this embodiment of this application may be used in a tunnel detection process between operator-side network devices or another network processing process in which a probe packet is sent to receive a response packet. This is not specifically limited in this application. In this embodiment of this application, an example in which the probe packet is used for tunnel detection is used to describe in detail the packet transmission method provided in this application. Scenarios in which the probe packet is used for another purpose are not described one by one.

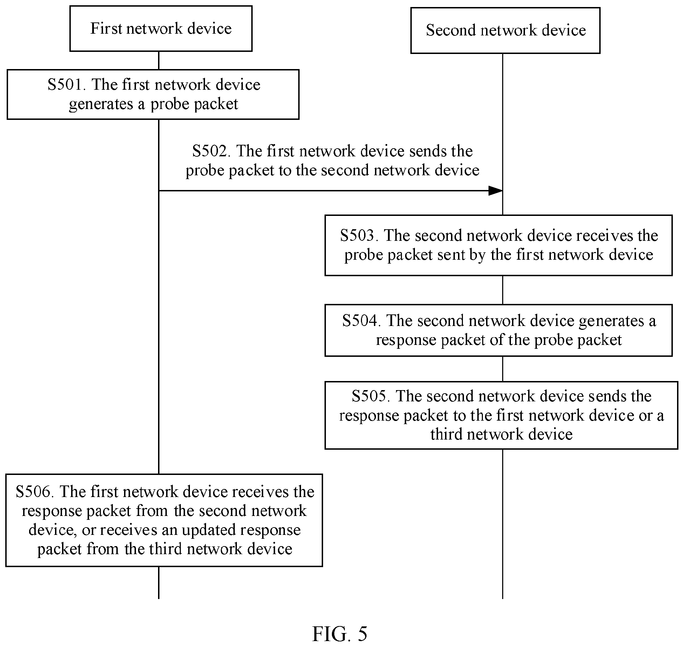

As shown in FIG. 5, the packet transmission method provided in this embodiment of this application may include the following steps.

S501. The first network device generates a probe packet.

Specifically, on an occasion on which network processing of sending a probe packet to receive a response packet needs to be performed, the first network device performs an operation in S501 to generate the probe packet. The occasion may be indicated by a user, a periodic moment, or another occasion. The network processing may be tunnel detection or other processing.

The probe packet is a packet sent by a transmitting end device in a network processing process in which the probe packet is sent to receive a response packet. For example, the probe packet may be used to detect whether a tunnel connected to the first network device is normal.

An application scenario and a function of the probe packet may be configured based on an actual situation. The application scenario and a specific function of the probe packet are not uniquely limited in this embodiment of this application.

In a possible implementation, the probe packet may be a packet used to detect whether the tunnel connected to the first network device is normal in an EVPN VPWS scenario.

The probe packet may include an identifier of the first network device. The identifier of the first network device included in the probe packet may be used to indicate a network device (for example, the second network device) that receives the probe packet to add the identifier of the first network device to a destination address in a response packet of the probe packet, to ensure that the first network device can receive the response packet corresponding to the sent probe packet. In the EVPN VPWS scenario, the first network device may be an end device on one side of the tunnel, and the device that receives the probe packet may be, for example, an end device on the other side of the tunnel. The tunnel may be a tunnel segment or a segmented tunnel.

Specifically, the identifier of the first network may be used to uniquely indicate the first network device. A type of the identifier of the first network device is not limited in this application.

In a possible implementation, the identifier of the first network device may include an IP address of the first network device.

For example, the IP address of the first network device may be an interface IP address of the first network device, a loopback interface IP address of the first network device, or a SID in a form of an IP address of the first network device.

The IP address may be an IPv4 address, an IPv6 address, or another address.

In another possible implementation, the identifier of the first network device may include a MAC address of the first network device.

Optionally, an encapsulation location of the identifier of the first network device in the probe packet may include but is not limited to the following implementation A or implementation B.

Implementation A: The identifier of the first network device is encapsulated into a data part in the probe packet in a TLV format.

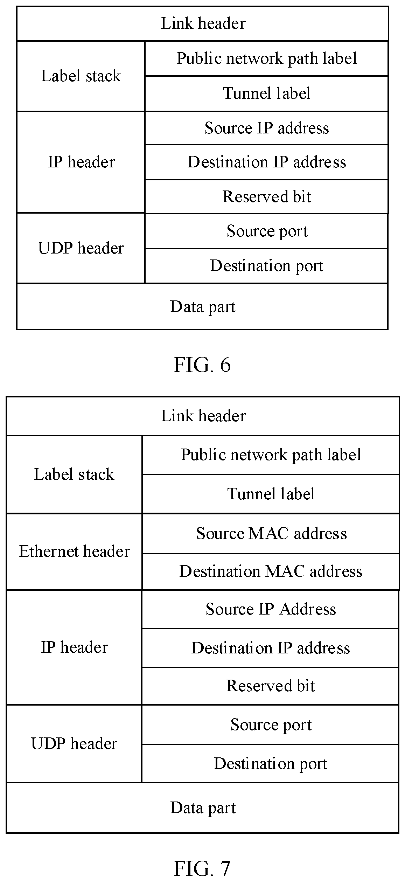

For example, FIG. 6 shows a structure of the probe packet. As shown in FIG. 6, the structure of the probe packet includes the data part and a header. The header may include a user datagram protocol (user datagram protocol, UDP) header, an IP header, a label stack, and a link header. As shown in FIG. 6, the UDP header may include a source port and a destination port; the IP header may include a source IP address, a destination IP address, and a reserved bit; and the label stack may include a public network path label and a tunnel label.

For example, the identifier of the first network device may be encapsulated in the TLV format into the data part in the probe packet of the structure shown in FIG. 6. The TLV includes a tag in the TLV, a length of the identifier of the first network device, and the identifier of the first network device.

It should be noted that a structure of the TLV may be configured based on an actual requirement. This is not specifically limited in this embodiment of this application.

For example, when the identifier of the first network device is an IPv4 address, the tag (tag, T) in the TLV may be configured to 26, a length (length, L) in the TLV may be configured to a length of the IPv4 address of the first network device, and a value (value, V) in the TLV may be configured to the IPv4 address of the first network device. The tag T occupies 1 byte, the length L occupies 1 byte, and the value V occupies 4 bytes.

For another example, when the identifier of the first network device is an IPv6 address, T in the TLV may be configured to 26, L in the TLV may be configured to a length of the IPv6 address of the first network device, and V in the TLV may be configured to the IPv6 address of the first network device. T occupies 1 byte, L occupies 1 byte, and V occupies 16 bytes.

For another example, when the identifier of the first network device is a MAC address, T in the TLV may be configured to 26, L in the TLV may be configured to a length of the MAC address of the first network device, and V in the TLV may be configured to the MAC address of the first network device. T occupies 1 byte, L occupies 1 byte, and V occupies 6 bytes.

Implementation B: The identifier of the first network device is encapsulated into a source IP address in an IP header in the probe packet.

Specifically, in the implementation B, the identifier of the first network device is the IP address of the first network device.

For example, in the implementation B, the IP address of the first network device may be encapsulated into the source IP address in the IP header in the probe packet of the structure shown in FIG. 6.

It may be understood that the identifier of the first network device may be encapsulated into another location in the probe packet based on an actual requirement. The implementation A or the implementation B constitutes no unique limitation.

Optionally, the probe packet may further include a type indication of the identifier of the first network device. The type indication of the identifier of the first network device is used to indicate the type of the identifier of the first network device carried in the probe packet. For example, the type of the identifier of the first network device may include but is not limited to any one of the following: IPv4, IPv6, and MAC. In some possible applications, the second network device may determine, based on the indication of the type of the identifier, a network application environment that matches the type.

Optionally, the probe packet may further include an addition indication, and the identifier of the first network device and the addition indication are used to jointly indicate the second network device to add the identifier of the first network device to the destination address in the response packet of the probe packet.

It should be noted that the user may configure a form of the addition indication and a location of the addition indication in the probe packet based on an actual situation. This is not uniquely limited in this application.

For example, the addition indication may be in a form of a value that includes one or more bits.

In a possible implementation, the addition indication may be one or more reserved bits in a header in the probe packet.

For example, the addition indication may be one or more reserved bits in the IP header in the probe packet of the structure shown in FIG. 6.

For example, the addition indication may be 3 reserved bits in the IP header in the probe packet, and a value of the reserved bits is 001.

For example, in a scenario in which the probe packet is used to detect a tunnel status, S501 may be implemented as follows: The first network device obtains identifier information of a to-be-detected tunnel, uses the identifier information of the to-be-detected tunnel as the data part in the probe packet, adds the identifier of the first network device, or adds the identifier of the first network device and the addition indication by using the method in the implementation A or the implementation B, and encapsulates the UDP header, the IP header, the label stack, and the link header for the packet, to generate the probe packet of the structure shown in FIG. 6.

The first network device may configure the source port in the UDP header in the probe packet to a random port number, and configure the destination port in the UDP header to 3503; configure the source IP address in the IP header in the probe packet to the IP address of the first network device, and configure the destination IP address to an IP address of the second network device, or configure the destination IP address in the IP header to 127/8, for example, 127.0.0.1, based on a stipulation in RFC 8029; and configure the public network label in the label stack to a path label of the tunnel detected by the first network device, and configure the tunnel label to a tunnel ingress label and a tunnel egress label.

S502. The first network device sends the probe packet to the second network device.

The second network device is a network device that receives the probe packet.

In a possible implementation, when the destination IP address in the probe packet is configured to an IP address of a destination device, the second network device may be a destination device existing when the first network device sends the probe packet.

For example, when the destination IP address in the probe packet is filled with the IP address of the second network device, and when receiving the probe packet, the second network device determines that the destination IP address in the probe packet is the same as the IP address of the second network device, it is considered that the second network device (the second network device) is the destination device.

In another possible implementation, when the destination IP address in the probe packet is configured to an indicated IP address, an identifier of the to-be-detected tunnel is used as a destination tunnel identifier in the probe packet, and the probe packet is sent through the tunnel connected to the first network device. Any one of a plurality of network devices at the other end of the tunnel may receive the probe packet, and a peer network device that receives the probe packet is the second network device.

The indicated IP address is used to indicate the network device that receives the probe packet no longer to forward the probe packet, and the network device that receives the probe packet processes the probe packet.

In a possible implementation, the indicated IP address may be 127/8, for example, 127.0.0.1, based on a stipulation in RFC 8029.

For example, in a tunnel detection scenario, there is a multi-homing scenario at the other end of the tunnel connected to the first network device, and the destination IP address in the probe packet is configured to 127/8, for example, 127.0.0.1. The identifier of the to-be-detected tunnel is used as the destination tunnel identifier in the probe packet, and the probe packet is sent through the tunnel connected to the first network device. Any one of the plurality of network devices at the other end of the tunnel may receive the probe packet, and when the peer network device that receives the probe packet determines that the destination IP address in the probe packet is configured to 127/8, it is considered that the second network device (the second network device) is the peer network device that receives the probe packet.

Specifically, S502 may be implemented as follows: The first network device sends, through the tunnel connected to the first network device, the probe packet generated in S501.

In a possible implementation, when the probe packet is a probe packet in the EVPN VPWS scenario, the first network device may send, through an EVPN VPWS tunnel, the probe packet generated in S501.

For example, the first network device directly sends the probe packet generated in S501 to the second network device through the tunnel. The first network device and the second network device are two end devices of the tunnel. Alternatively, there are a plurality of tunnel segments between the first network device and the second network device, the first network device is an end device of a first tunnel segment, and the second network device is an end device of a last tunnel segment.

For another example, the first network device sends, through a tunnel, the probe packet generated in S501, and the probe packet reaches the second network device after being forwarded by one or more network devices.

For example, the first network device sends, through an EVPN VPWS tunnel over MPLS or an SR public network, the probe packet generated in S501, and then the probe packet is forwarded to the second network device by using a network device 1 and a network device 2.

S503. The second network device receives the probe packet sent by the first network device.

Specifically, the network device may identify a purpose of a packet by using a number of a port that receives the packet. For example, a packet received by a specific port may be configured as a probe packet, and the second network device identifies a receiving port when receiving a packet, to determine whether the received packet is a probe packet.

For example, if it is specified in a protocol that a port 3503 receives a probe packet used to detect whether a tunnel is normal, when receiving the packet in S503, the second network device identifies that a number of a port that receives the packet is 3503, and may determine that the packet is a probe packet used to detect whether a tunnel is normal. Then, the second network device identifies the destination IP address in the probe packet. If the IP address is the IP address of the second network device, or the destination IP is 127/8, the probe packet is uploaded to the second network device for processing. The second network device decapsulates the probe packet to obtain data information in the probe packet, to perform S504. If the destination address in the probe packet is not the address of the second network device, the second network device may forward the packet based on the destination IP address, to forward the packet to a network device that can perform S504.

S504. The second network device generates the response packet of the probe packet.

Specifically, in S504, the second network device performs corresponding processing based on a purpose of the received probe packet. For example, when the probe packet is used to detect whether a tunnel is normal, the second network device detects whether the tunnel is normal in S504, to obtain a detection result. The second network device uses a result obtained by performing the processing in S504 as a data part, and generates the response packet.

In a possible implementation, the second network device obtains the identifier of the first network device from the encapsulation location of the identifier of the first network device in the probe packet, and uses the identifier of the first network device as the destination address in the response packet based on the indication of the identifier of the first network device, to generate the response packet. The encapsulation location of the identifier of the first network device is known to the second network device. A known manner may be that the second network device directly knows the encapsulation location of the identifier of the first network device, or the second network device determines, by using identifier indication information, the encapsulation location of the identifier of the first network device.

In another possible implementation, the second network device obtains the identifier of the first network device from the encapsulation location of the identifier of the first network device in the probe packet (the encapsulation location of the identifier of the first network device is known to the second network device), obtains the addition indication from the location of the addition indication in the probe packet (the location of the addition indication is known to the second network device), and uses the identifier of the first network device as the destination address in the response packet based on joint indication of the obtained identifier of the first network device and the addition indication, to generate the response packet. The addition indication may be used to indicate whether the second network device needs to add the identifier of the first network device to the response packet.

It should be understood that if the second network device does not obtain the identifier of the first network device from the encapsulation location of the identifier of the first network device in the probe packet, or the second network device obtains the identifier of the first network device from the encapsulation location of the identifier of the first network device in the probe packet, but does not obtain the addition indication from the location of the addition indication in the probe packet, or the second network device does not obtain the identifier of the first network device from the encapsulation location of the identifier of the first network device in the probe packet, and does not obtain the addition indication from the location of the addition indication in the probe packet, the response packet generated by the second network device in S504 may not carry the identifier of the first network device.

For example, in S504, when generating the response packet of the probe packet, the second network device may use the processing result as the data part in the response packet, use the identifier of the first network device as the destination address in the response packet, and encapsulate a UDP header, an IP header, an Ethernet header, a label stack, and a link layer for the data part in the response packet, to generate the response packet of the probe packet. For example, a packet structure of the response packet may be shown in FIG. 7. The response packet may include the data part and a header. The header may include a UDP header, an IP header, an Ethernet header, a label stack, and a link header. The UDP header may include a source port and a destination port. The IP header may include a source IP address, a destination IP address, and a reserved bit. The Ethernet header may include a source MAC address and a destination MAC address. The label stack may include a public network path label and a tunnel label.

In a possible implementation, the probe packet may be a probe packet in the EVPN VPWS scenario. Correspondingly, in S504, the response packet of the probe packet may be a response packet of the probe packet in the EVPN VPWS scenario. In this possible implementation, the tunnel label in the response packet of the structure shown in FIG. 7 is an EVPN VPWS tunnel label.

In a possible implementation, when the identifier of the first network device is the IP address of the first network device, the second network device uses the IP address of the first network device as the destination IP address in the response packet.

In another possible implementation, when the identifier of the first network device is the MAC address of the first network device, the second network device uses the MAC address of the first network device as the destination MAC address in the response packet.

For example, in the scenario in which the probe packet is used to detect whether a tunnel is normal, S504 may be implemented as follows: The second network device obtains an egress identifier of the to-be-detected tunnel in the data part in the probe packet, and if the identifier is the same as a tunnel identifier on the second network device, determines that the to-be-detected tunnel is normal, or if the identifier is different from a tunnel identifier on the second network device, determines that the to-be-detected tunnel is abnormal. The second network device uses the detection result indicating that the tunnel is normal or abnormal as the data part in the response packet of the probe packet, or the second network device converts the detection result indicating that the tunnel is normal or abnormal into a corresponding code, and uses the code as the data part in the response packet of the probe packet. Then, the second network device obtains the identifier of the first network device carried in the probe packet, uses the identifier of the first network device as the destination address in the response packet of the probe packet, and encapsulates the UDP header, the IP header, the Ethernet header, the label stack, and the link layer for the data part in the response packet, to generate the response packet of the probe packet.

Further, optionally, when determining whether the to-be-detected tunnel is normal, the second network device may further determine packet loss and a delay in addition to determining whether the egress identifier of the to-be-detected tunnel is the same as the tunnel identifier on the second network device. Specifically, if the second network device determines that the egress identifier of the to-be-detected tunnel is the same as the tunnel identifier on the second network device, no packet loss occurs on the received probe packet, the delay is less than a preset threshold, and the egress identifier of the to-be-detected tunnel in the probe packet is the same as the tunnel identifier on the second network device, it is determined that the to-be-detected tunnel is normal. Otherwise, it is determined that the to-be-detected tunnel is abnormal.

It should be noted that the process of determining whether the to-be-detected tunnel is normal is an example for description, and constitutes no unique limitation.

For example, if the probe packet carries the IP address of the first network device, in the scenario in which the probe packet is used to detect whether a tunnel is normal, S504 may be implemented as follows: The second network device obtains the egress identifier of the to-be-detected tunnel in the probe packet, determines that the identifier is the same as the tunnel identifier on the second network device, counts the delay and a quantity of packets of the received probe packet, and if there is no packet loss and the delay is less than the preset threshold, considers that communication through the EVPN VPWS tunnel is normal. Otherwise, it is considered that communication through the EVPN VPWS tunnel is abnormal. The second network device converts the detection result indicating that the tunnel is normal or abnormal into a code corresponding to the detection result, and uses the code as the data part in the response packet of the probe packet. Then, the second network device fills the source port in the UDP header in the response packet of the probe packet with 3503, and fills the destination port number with 65004; fills the source IP address in the IP header in the response packet of the probe packet with the IP address of the second network device, and after obtaining the IP address of the first network device carried in the probe packet, fills the destination IP address in the IP header in the response packet of the probe packet with the IP address of the first network device; fills the source MAC address in the Ethernet header in the response packet of the probe packet with a MAC address of the second network device, and after obtaining the MAC address of the first network device by searching a route, fills the destination MAC address in the Ethernet header in the response packet of the probe packet with the MAC address of the first network device; and then adds information such as an MPLS label or an SR label and an EVPN VPWS tunnel label to the response packet of the probe packet, to generate the response packet of the probe packet.

The second network device adds the IP address of the first network device to the destination IP address in the response packet. Therefore, it can be ensured that the response packet can be finally and smoothly forwarded to the first network device that serves as a transmitting end of the probe packet, and there is no problem that the response packet possibly cannot smoothly reach the transmitting end of the probe packet because the destination IP address is filled with a default value shared by the first network device and the third network device in a conventional implementation. In addition, the IP address of the first network device is added to a destination IP address field in the response packet, and therefore after receiving the response packet, a device that serves as a non-transmitting end may continue to forward the response packet based on a conventional forwarding rule, to improve running compatibility of a network.

S505. The second network device sends the response packet to the first network device or the third network device.

Both the third network device and the first network device are connected to the same first user-side network device. The third network device is any network device other than the first network device connected to the same user-side network device. In an EVPN VPWS multi-homing multi-active scenario, as shown in FIG. 3, the first network device may be the first PE 301, the second network device may be the second PE 302, and the third network device may be the third PE 303.

For example, the second network device may select, based on a load sharing algorithm, one network device from a plurality of network devices connected to the first user-side network device, and send the response packet of the probe packet generated in S504 to the selected network device through the tunnel. FIG. 3 is still used as an example. The second PE 302 may send the response packet to one of the first PE 301 or the second PE 303 based on the load sharing algorithm.

It should be noted that the user may configure the load sharing algorithm based on an actual requirement. For example, in a possible implementation, a network device with lightest load is selected based on the load sharing algorithm, or any network device whose load is less than a first threshold is selected based on the load sharing algorithm.

It should be noted that the user may configure the first threshold based on an actual requirement. This is not limited in this embodiment of this application.

The second network device may alternatively send the response packet to the first network device or the third network device based on another preset mechanism.

For example, the second network device sends the response packet of the probe packet generated in S504 to the first network device or the third network device through a tunnel over MPLS or an SR public network.

S506. The first network device receives the response packet from the second network device, or receives an updated response packet from the third network device.

The destination address in the response packet and a destination address in the updated response packet are the identifier of the first network device.

In a possible implementation, S506 may be implemented as follows: The first network device receives the response packet of the probe packet sent by the second network device in S505, and the first network device obtains the destination address in the response packet of the probe packet, determines that the destination address is the identifier of the first network device, and then decapsulates the response packet, to obtain the data information in the response packet.

In another possible implementation, the third network device receives the response packet of the probe packet sent by the second network device in S505, and the third network device obtains the destination address in the response packet, determines that the destination address is the identifier of the first network device and is different from a network device identifier of the third network device, updates the response packet, and forwards, in another manner such as an IP route or a tunnel, the updated response packet of the probe packet to the first network device indicated by the destination address. The first network device receives the updated response packet of the probe packet forwarded by the third network device, obtains the destination address in the updated response packet of the probe packet, determines that the destination address is the identifier of the first network device, and then decapsulates the updated response packet of the probe packet to obtain data information in the updated response packet of the probe packet. Specific implementation of an operation of updating the response packet may be to modify the received packet in a specific manner, for example, remove encapsulation of the label stack and the link layer in the response packet of the probe packet, or further add other necessary information to the packet. Alternatively, in another possible case, the updating the response packet may alternatively be understood that the third network device does not need to make any substantial changes to the packet, and the third network device transparently and directly transmits the packet to the first network device.

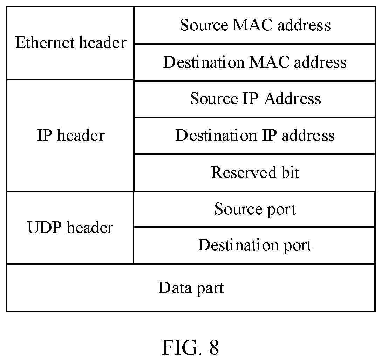

For example, if the second network device sends the response packet of the structure shown in FIG. 7 to the third network device in S505, and the destination address in the response packet is the identifier of the first network device, the updated response packet sent by the third network device to the first network device may be shown in FIG. 8.

Optionally, in the scenario in which the probe packet is used to detect whether a tunnel is normal, the first network device determines, based on the obtained data information in the response packet, whether the to-be-detected tunnel is normal.

This embodiment of this application provides the packet transmission method. An identifier of a transmitting end device is added to a probe packet, and a receiving end device of the probe packet adds the identifier as a destination address in a response packet of the probe packet. In this way, even if a non-transmitting end device receives the response packet, the response packet may be forwarded to the transmitting end device of the probe packet based on the destination address in the response packet, to ensure that the transmitting end device of the probe packet can receive the response packet of the sent probe packet. When the probe packet is used to detect a tunnel status, a detection error caused due to the fact that the transmitting end device of the probe packet cannot receive the response packet of the probe packet is avoided, and tunnel detection accuracy is improved.

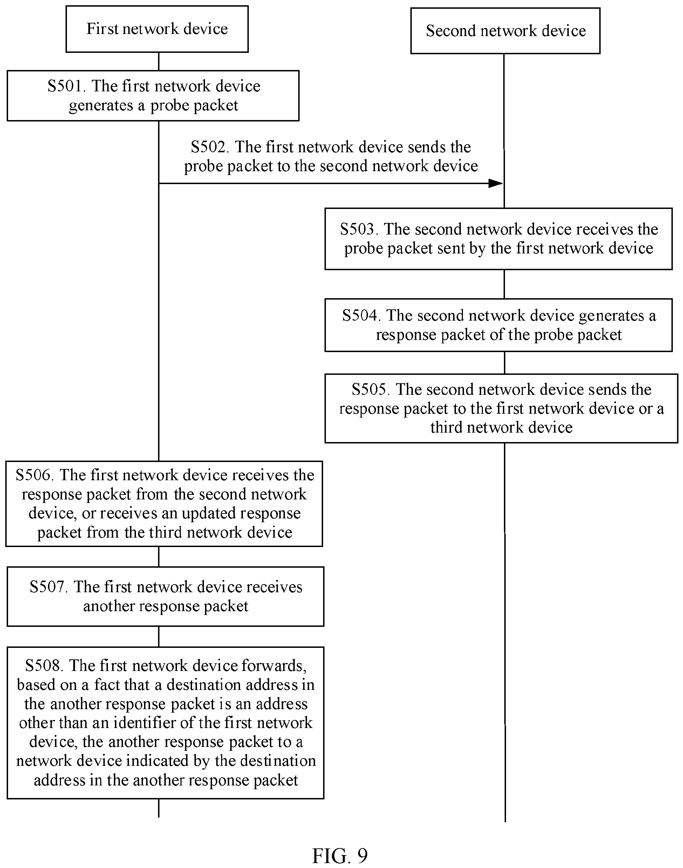

Further, in actual application, the first network device may further receive a response packet of a probe packet sent by another network device. As shown in FIG. 9, the packet transmission method provided in this embodiment of this application may further include the following steps S507 and S508.

S507. The first network device receives another response packet.

It may be understood that the transmitting end device of the probe packet may be a network device other than the first network device. When the transmitting end device of the probe packet is a network device other than the first network device connected to the first user-side network device, the first network device may further receive the another response packet sent by a remote network device (for example, the second network device) through a tunnel.

For a format and content of the another response packet, refer to the description of the foregoing response packet. Details are not described herein.

S508. The first network device forwards, based on the fact that a destination address in the another response packet is an address other than the identifier of the first network device, the another response packet to a network device indicated by the destination address in the another response packet.

The network device indicated by the destination address in the another response packet is connected to the first user-side network device.

Specifically, S508 may be implemented as follows: The first network device obtains the destination address in the another response packet received in S507, and determines that the destination address in the another response packet is different from the destination address of the first network device, and the first network device updates the another response packet, and then forwards, through an IP route or a tunnel, an updated another response packet to the network device indicated by the destination address in the another response packet.

Optionally, after receiving the updated another response packet, the another network device may further obtain data information in the updated another response packet.

A packet transmission process provided in this embodiment of this application is described below by using the packet transmission system in the EVPN VPWS dual-homing active-active scenario shown in FIG. 1 as an example.

As shown in FIG. 1, if the PE 1 initiates tunnel detection to detect whether an EVPN tunnel from a tunnel identifier 100 to a tunnel identifier 200 is normal, this process may include:

In a case, the PE 1 obtains an IP address of the PE 1 and an egress end identifier of the to-be-detected tunnel, uses the IP address of the PE 1 stored in a TLV format and the egress end identifier of the to-be-detected tunnel as a data part in a probe packet, and then encapsulates the data part to generate the probe packet. The PE 1 sends the probe packet to an egress end device of the tunnel through the EVPN VPWS tunnel from 100 to 200. The PE 3 receives the probe packet, decapsulates the probe packet, obtains the identifier of the to-be-detected tunnel from the data part in the probe packet, obtains a current detection result of the tunnel based on the identifier, and uses the current detection result of the tunnel as a data part in a response packet of the probe packet. The PE 3 obtains the IP address of the PE 1 in the probe packet from the data part in the probe packet, adds the IP address of the PE 1 to a destination IP address in the response packet of the probe packet, encapsulates the response packet of the probe packet, and sends the response packet to the egress device of the tunnel through the EVPN VPWS tunnel. If receiving the response packet, the PE 1 obtains the current detection result of the tunnel based on the response packet. If the PE 2 receives the response packet, the PE 2 updates the response packet, and forwards an updated response packet to the PE 1 through an IP route. The PE 1 receives the response packet forwarded by the PE 2, and obtains the current detection result of the tunnel.

In another case, the PE 1 obtains an egress end identifier of the to-be-detected tunnel, uses the egress end identifier of the to-be-detected tunnel as a data part in a packet, obtains an IP address of the PE 1, configures a source IP address in an IP header in the packet to a source IP address of the PE 1, configures 3 reserved bits in the packet to 001, uses the reserved bits as an addition indication, and then encapsulates the packet to generate the probe packet. The PE 1 sends the probe packet to an egress end device of the tunnel through the EVPN VPWS tunnel from 100 to 200. The PE 3 receives the probe packet, decapsulates the probe packet, obtains the end identifier of the to-be-detected tunnel in the probe packet from the data part in the probe packet, obtains a current detection result of the tunnel based on the identifier, and uses the detection result as a data part in a response packet of the probe packet. The PE 1 finds that there is the addition indication 001 in the probe packet, obtains the IP address of the PE 1 from the source IP address in the IP header in the probe packet, adds the IP address of the PE 1 to a destination IP address in the response packet of the probe packet, encapsulates the response packet of the probe packet, and sends the response packet to the egress device of the tunnel through the EVPN VPWS tunnel. If receiving the response packet, the PE 1 obtains the current detection result of the tunnel based on the response packet. If the PE 2 receives the response packet, the PE 2 updates the response packet, and forwards an updated response packet to the PE 1. The PE 1 receives the response packet forwarded by the PE 2, and obtains the current detection result of the tunnel.

In still another case, the PE 1 obtains a MAC address of the PE 1 and an egress end identifier of the to-be-detected tunnel, uses the MAC address of the PE 1 stored in a TLV format and the egress end identifier of the to-be-detected tunnel as a data part in a packet, configures 3 reserved bits in the packet to 001, uses the reserved bits as an addition indication, and then encapsulates the packet to generate the probe packet. The PE 1 sends the probe packet to an egress end device of the tunnel through the EVPN VPWS tunnel from 100 to 200. The PE 3 receives the probe packet, decapsulates the probe packet, obtains the end identifier of the to-be-detected tunnel in the probe packet from the data part in the probe packet, obtains a current detection result of the tunnel based on the identifier, and uses the detection result as a data part in a response packet of the probe packet. The PE 1 finds that there is the addition indication 001 in the probe packet, searches the data part in the probe packet for the MAC address of the PE 1 stored in the TLV format, adds the MAC address of the PE 1 to a destination MAC address in the response packet of the probe packet, encapsulates the response packet of the probe packet, and sends the response packet to the egress device of the tunnel through the EVPN VPWS tunnel. If receiving the response packet, the PE 1 obtains the current detection result of the tunnel based on the response packet. If the PE 2 receives the response packet, the PE 2 updates the response packet, and forwards an updated response packet to the PE 1. The PE 1 receives the response packet forwarded by the PE 2, and obtains the current detection result of the tunnel.

The solutions provided in the embodiments of the present invention are mainly described above from a perspective of interaction between the first network device and the second network device in the packet transmission system. It may be understood that to implement the foregoing functions, each packet transmission apparatus, for example, the first network device or the second network device, includes corresponding hardware structures and/or software modules for performing the functions. A person skilled in the art should easily be aware that, in combination with the units and algorithm steps in the examples described in embodiments disclosed in this specification, the present invention can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

In the embodiments of the present invention, the packet transmission apparatus or the like may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of the present invention, division into the modules is an example and is merely logical function division, and may be other division during actual implementation.

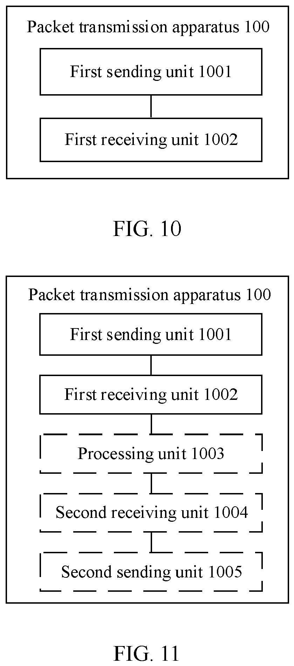

When each functional module is obtained through division based on each corresponding function, FIG. 10 shows a packet transmission apparatus 100 according to an embodiment of this application. The packet transmission apparatus is configured to implement the function of the first network device in the foregoing embodiments. The packet transmission apparatus 100 may be a first network device, or the packet transmission apparatus 100 may be deployed in a first network device. As shown in FIG. 10, the packet transmission apparatus 100 may include a first sending unit 1001 and a first receiving unit 1002. The first sending unit 1001 is configured to perform S502 in FIG. 5 or FIG. 9. The first receiving unit 1002 is configured to perform S506 in FIG. 5 or FIG. 9. All related content of the steps in the method embodiments may be cited in function descriptions of corresponding functional modules. Details are not described herein again.

Further, as shown in FIG. 11, the packet transmission apparatus 100 may further include a processing unit 1003, a second receiving unit 1004, and a second sending unit 1005. The processing unit 1003 is configured to perform S501 in FIG. 5 or FIG. 9. The second receiving unit 1004 is configured to perform S507 in FIG. 9. The second sending unit 1005 is configured to perform S508 in FIG. 9. All related content of the steps in the method embodiments may be cited in function descriptions of corresponding functional modules. Details are not described herein again.

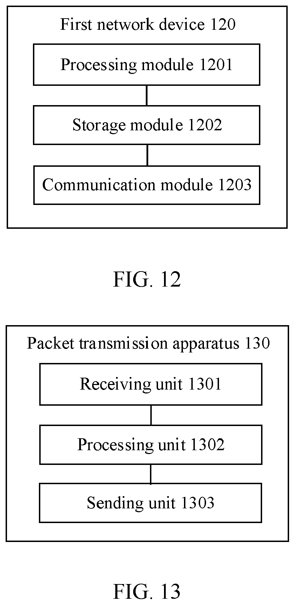

When an integrated unit is used, FIG. 12 shows a first network device 120 according to an embodiment of this application. The first network device is configured to implement the function of the first network device in the foregoing method. The first network device 120 includes at least one processing module 1201, configured to implement the function of the first network device in the embodiments of this application. For example, the processing module 1201 may be configured to perform the process S501 in FIG. 5. For details, refer to the detailed description in the method examples. Details are not described herein.

The first network device 120 may further include at least one storage module 1202, configured to store program instructions and/or data. The storage module 1202 and the processing module 1201 are coupled to each other. The coupling in this embodiment of this application is indirect coupling or a communication connection between apparatuses, units, or modules for information exchange between the apparatuses, the units, or the modules, and may be in electrical, mechanical, or other forms. The processing module 1201 may cooperate with the storage module 1202 to perform an operation. The processing module 1201 may execute the program instructions stored in the storage module 1202. At least one of the at least one storage module may be included in the processing module.

The first network device 120 may further include a communication module 1203, configured to communicate with another device by using a transmission medium, to determine that the first network device 120 can communicate with another device. The communication module 1203 is used by the device to communicate with another device. For example, the processor 1201 may perform the processes S502, S506, S507, and S508 in FIG. 5 or FIG. 9 by using the communication module 1203.

When the processing module 1201 is a processor, the storage module 1202 is a memory, and the communication module 1203 is a transceiver, the first network device 120 in FIG. 12 in this embodiment of this application may be the network device 40 shown in FIG. 4.

As described above, the packet transmission apparatus 100 or the first network device 120 provided in the embodiments of this application may be configured to implement the function of the first network device in the method implemented in the embodiments of this application. For ease of description, only a part related to this embodiment of this application is shown. For specific technical details that are not disclosed, refer to the embodiments of this application.

When each functional module is obtained through division based on each corresponding function, FIG. 13 shows a packet transmission apparatus 130 according to an embodiment of this application. The packet transmission apparatus is configured to implement the function of the second network device in the foregoing embodiments. The packet transmission apparatus 130 may be a second network device, or the packet transmission apparatus 130 may be deployed in a second network device. As shown in FIG. 13, the packet transmission apparatus 130 may include a receiving unit 1301, a processing unit 1302, and a sending unit 1303. The receiving unit 1301 is configured to perform S503 in FIG. 5 or FIG. 9. The processing unit 1302 is configured to perform S504 in FIG. 5 or FIG. 9. The sending unit 1303 is configured to perform S505 in FIG. 5 or FIG. 9. All related content of the steps in the method embodiments may be cited in function descriptions of corresponding functional modules. Details are not described herein again.

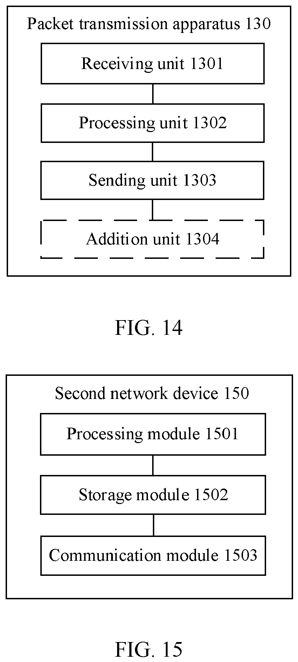

Further, as shown in FIG. 14, the packet transmission apparatus 130 may further include an addition unit 1304. The addition unit 1304 is configured to perform S504 in FIG. 5 or FIG. 9. All related content of the steps in the method embodiments may be cited in function descriptions of corresponding functional modules. Details are not described herein again.

When an integrated unit is used, FIG. 15 shows a second network device 150 according to an embodiment of this application. The second network device is configured to implement the function of the second network device in the foregoing embodiments. The second network device 150 may include at least one processing module 1501, configured to implement the function of the second network device in the embodiments of this application. For details, refer to the detailed description in the method examples. Details are not described herein.

The second network device 150 may further include at least one storage module 1502, configured to store program instructions and/or data. The storage module 1502 and the processing module 1501 are coupled to each other. The coupling in this embodiment of this application is indirect coupling or a communication connection between apparatuses, units, or modules for information exchange between the apparatuses, the units, or the modules, and may be in electrical, mechanical, or other forms. The processing module 1501 may cooperate with the storage module 1502 to perform an operation. The processing module 1501 may execute the program instructions stored in the storage module 1502. At least one of the at least one storage module may be included in the processing module.

The second network device 150 may further include a communication module 1503, configured to communicate with another device by using a transmission medium, to determine that the second network device 150 can communicate with another device. The communication module 1503 is used by the device to communicate with another device. For example, the processing module 1501 performs S503 and S505 in the process in FIG. 5 or FIG. 9 by using the communication module 1503.

When the processing module 1501 is a processor, the storage module 1502 is a memory, and the communication module 1503 is a transceiver, the second network device 150 in FIG. 15 in this embodiment of this application may be the network device 40 shown in FIG. 4.

As described above, the packet transmission apparatus 130 or the second network device 150 provided in the embodiments of this application may be configured to implement the function of the second network device in the foregoing embodiments of this application. For ease of description, only a part related to this embodiment of this application is shown. For specific technical details that are not disclosed, refer to the embodiments of this application.

Some other embodiments of this application provide a packet transmission system. The packet transmission system may include a first apparatus for packet transmission and a second apparatus for packet transmission. The first apparatus for packet transmission may implement the function of the first network device in the foregoing embodiments, and the second apparatus for packet transmission may implement the function of the second network device. For example, the first apparatus for packet transmission may be the first network device described in the embodiments of this application, and the second apparatus for packet transmission may be the second network device described in the embodiments of this application.

Some other embodiments of this application provide a chip system. The chip system includes a processor, and may further include a memory, configured to implement the function of the first network device in the embodiment shown in FIG. 5 or FIG. 9. The chip system may include a chip, or include a chip and another discrete device.

Some other embodiments of this application provide a chip system. The chip system includes a processor, and may further include a memory, configured to implement the function of the second network device in the embodiment shown in FIG. 5 or FIG. 9. The chip system may include a chip, or include a chip and another discrete device.

Some other embodiments of this application further provide a computer-readable storage medium. The computer-readable storage medium may include a computer program. When the computer program is run on a computer, the computer is enabled to perform the steps in the embodiment shown in FIG. 5 or FIG. 9.

Some other embodiments of this application further provide a computer program product. The computer program product includes a computer program. When the computer program product is run on a computer, the computer is enabled to perform the steps in the embodiment shown in FIG. 5 or FIG. 9.

Based on the foregoing descriptions of the implementations, a person skilled in the art may clearly understand that for the purpose of convenient and brief descriptions, division into the foregoing functional modules is merely used as an example for description. During actual application, the foregoing functions can be allocated to different functional modules for implementation based on a requirement, in other words, an inner structure of an apparatus is divided into different functional modules to implement all or a part of the functions described above.

In the several embodiments provided in this application, it should be understood that the disclosed apparatuses and methods may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be in electrical, mechanical, or other forms.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the current technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of steps of the methods in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are only specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A packet transmission method, wherein the method is performed by a first network device, and the method comprises:
sending a probe packet to a second network device, wherein the probe packet comprises an identifier of the first network device, and the identifier of the first network device is used to indicate the second network device to add the identifier of the first network device to a destination address in a response packet of the probe packet; and
receiving the response packet from the second network device, wherein the destination address in the response packet is the identifier of the first network device; or receiving an updated response packet from a third network device, wherein a destination address in the updated response packet is the identifier of the first network device, and both the third network device and the first network device are connected to a same user-side network device.

2. The method according to claim 1, wherein the identifier of the first network device comprises:
an internet protocol IP address of the first network device; or
a media access control MAC address of the first network device.

3. The method according to claim 2, wherein the IP address of the first network device comprises:
an interface IP address of the first network device;
a loopback loopback interface IP address of the first network device; or
a segment identifier SID in a form of an IP address of the first network device.

4. The method according to any one of claims 1 to 3, wherein before the sending a probe packet to a second network device, the method further comprises:
generating the probe packet, wherein
the identifier of the first network device is encapsulated into a data part in the probe packet in a tag-length-value TLV format, or
the identifier of the first network device is encapsulated into a source IP address in an IP header in the probe packet.

5. The method according to any one of claims 1 to 4, wherein the probe packet further comprises an addition indication, and that the identifier of the first network device is used to indicate the second network device to add the identifier of the first network device to a destination address in a response packet of the probe packet comprises:
the identifier of the first network device and the addition indication are used to jointly indicate the second network device to add the identifier of the first network device to the destination address in the response packet.

6. The method according to any one of claims 1 to 5, wherein the method further comprises:
receiving another response packet; and
forwarding, based on the fact that a destination address in the another response packet is an address other than the identifier of the first network device, the another response packet to a network device indicated by the destination address in the another response packet, wherein the network device indicated by the destination address in the another response packet is connected to the user-side network device.

7. The method according to any one of claims 1 to 6, wherein the first network device, the second network device, and the third network device are provider edge devices PEs, and the user-side network device is a customer edge device CE.

8. The method according to any one of claims 1 to 7, wherein the probe packet is a probe packet in an Ethernet virtual private local area network EVPN virtual private wireless service VPWS scenario, and the response packet is a response packet in the EVPN VPWS scenario.

9. A packet transmission method, wherein the method is performed by a second network device, and the method comprises:
receiving a probe packet sent by a first network device, wherein the probe packet comprises an identifier of the first network device;
generating a response packet of the probe packet, wherein a destination address in the response packet comprises the identifier of the first network device; and
sending the response packet to the first network device or a third network device, wherein both the third network device and the first network device are connected to a same user-side network device.

10. The method according to claim 9, wherein the identifier of the first network device comprises:
an internet protocol IP address of the first network device; or
a media access control MAC address of the first network device.

11. The method according to claim 10, wherein the IP address of the first network device comprises:
an interface IP address of the first network device;
a loopback loopback interface IP address of the first network device; or
a segment identifier SID in a form of an IP address of the first network device.

12. The method according to any one of claims 9 to 11, wherein the identifier of the first network device is encapsulated into a data part in the probe packet in a tag-length-value TLV format, or
the identifier of the first network device is encapsulated into a source IP address in an IP header in the probe packet.

13. The method according to any one of claims 9 to 12, wherein the probe packet further comprises an addition indication, and the method further comprises:
adding the identifier of the first network device to the destination address in the response packet based on the addition indication and the identifier of the first network device.

14. The method according to claim 10, wherein the generating a response packet of the probe packet comprises:
adding the IP address of the first network device to a destination IP address in the response packet; or
adding the MAC address of the first network device to a destination MAC address in the response packet.

15. The method according to any one of claims 9 to 14, wherein the sending the response packet to the first network device or a third network device comprises:
sending the response packet to the first network device or the third network device based on a load sharing algorithm.

16. The method according to any one of claims 9 to 15, wherein the first network device, the second network device, and the third network device are provider edge devices PEs, and the user-side network device is a customer edge device CE.

17. The method according to any one of claims 9 to 16, wherein the probe packet is a probe packet in an Ethernet virtual private local area network EVPN virtual private wireless service VPWS scenario, and the response packet is a response packet in the EVPN VPWS scenario.

18. A first network device, wherein the device comprises a processor and a memory, wherein
the memory is connected to the processor, the memory is configured to store computer instructions, and when the processor executes the computer instructions, the device performs the packet transmission method according to any one of claims 1 to 8.

19. A second network device, wherein the device comprises a processor and a memory, wherein
the memory is connected to the processor, the memory is configured to store computer instructions, and when the processor executes the computer instructions, the device performs the packet transmission method according to any one of claims 9 to 17.

20. A packet transmission system, comprising the first network device according to claim 18 and the second network device according to claim 19.

21. A computer-readable storage medium, comprising instructions, wherein when the instructions are run on a computer, the computer is enabled to perform the packet transmission method according to any one of claims 1 to 17.
